# EUROPÄISCHE PATENTSCHRIFT

(11) **EP 1 359 413 B1**
(45) Veröffentlichungstag und Bekanntmachung des Hinweises auf die Patenterteilung: **01.10.2008**
(21) Anmeldenummer: 03090125.0
(22) Anmeldetag: 24.04.2003
(51) Int. Cl.: G01N 29/26, G01N 29/48

(54) **Verfahren zur Erfassung von Ungänzen an langgestreckten Werkstücken mittels Ultraschall**
Process for detecting flaws in oblong work pieces with ultrasounds
Procédé pour détecter des défauts dans des pièces oblongues avec des ultrasons

(30) Priorität: 29.04.2002 DE 10220946
(43) Veröffentlichungstag der Anmeldung: 05.11.2003
(73) Patentinhaber: Salzgitter Mannesmann Präzisrohr GmbH, 59067 Hamm (DE)
(72) Erfinder: Graff, Alfred, 45239 Essen (DE); Schlawne, Friedhelm, 47249 Duisburg (DE)
(74) Vertreter: Meissner, Peter E.

(56) Entgegenhaltungen:
- DE-A1- 3 943 226
- US-A- 4 307 612
- US-A- 5 679 898
- PATENT ABSTRACTS OF JAPAN Bd. 018, Nr. 142 (P-1706), 9. März 1994 (1994-03-09) & JP 05 322860 A (NGK INSULATORS LTD), 7. Dezember 1993 (1993-12-07)

## Beschreibung

Die Erfindung betrifft ein Verfahren zur Erfassung von Ungänzen an langgestreckten Werkstücken, insbesondere an Rohren und Stangen, mittels Ultraschall gemäß dem Oberbegriff des Patentanspruches 1.

Aus der JP 05 322860 ist ein Verfahren zur Fehlerdetektion an Isolatorröhren bekannt, bei dem während der Rotation und eines axialen Voschubs eine Ultraschallprüfung durchgeführt wird. Die empfangenen Signale werden in Zeitabschnitte unterteilt und das Amplitudenmaximum in jedem Abschnitt bestimmt. Die Signaldifferenz an zwei benachbarten Punkten ermöglicht die Eliminierung von störenden Signalen einer komplexen Geometrie damit diese nicht mit von einem Fehler herrührenden Signalen verwechselt werden können.

Der axiale Abstand der zwei benachbarten Punkte muss somit immer sehr klein sein, um nahezu identische Empfangssignale der störenden Geometrieabweichung zu erhalten.

Aus der DE 36 22 500 A1 ist ein Verfahren und eine Vorrichtung zur Erfassung von Ungänzen an zylindrischen Rohren und Stangen bekannt. Bei diesem Verfahren wird der Prüfling in axialer Richtung ohne Drehung an feststehenden Sende- und Empfangswandlem vorbei geführt und im Prüfling geführte tangential umlaufende Wellenimpulse im Takt erzeugt, empfangen und die Amplituden der im Takt nacheinander empfangenen Signale durch Quotientenbildung zur Fehlerbestimmung in einem Rechner benutzt.

Zur Bewertung werden die empfangenen Signale mit Burstsignalen derselben Frequenz, geeigneter Zeitdauer und Startverzögerung synchronisiert, einem Peak-Detektor zugeführt und die Amplituden digitalisiert an einen Rechner übertragen.

Aus der DE 39 43 226 C2 ist ein Verfahren zur Erfassung von Ungänzen an langgestreckten Werkstücken, insbesondere an Rohren und Stangen, mittels Ultraschall bekannt. Bei diesem Verfahren wird der Prüfling in axialer Richtung ohne Drehung an mindestens einem feststehenden elektrodynamischen Wandler vorbei geführt und im Prüfling tangential umlaufende Wellenimpulse, die sich in beide Umfangsrichtungen ausbreiten, im Takt erzeugt und an einem um ein Viertel der Spurwellenlänge der geführten Wellen zum Sendeort verschobenen Empfangsort empfangen.

Der Ort des Empfanges und der Anregung der gleichzeitig in beide Umlaufrichtungen des Prüflings laufenden Wellenimpulse wird derart gewählt, dass die beiden ungestört laufenden Wellenimpulse am Ort des Empfängers destruktiv interferieren. Für jeden Takt wird das Empfangssignal und ein ein großes Tastverhältnis aufweisendes Burstsignal, dessen Periode kleiner als ein Viertel der Umlaufzeit der Wellenimpulse um den Prüfling gewählt ist und dessen Länge der Abklingzeit der ungestört laufenden Wellenimpulse bei fehlerfreiem Werkstück entspricht, einem Peak-Detektor zugeführt und das Ausgangssignal des Peak-Detektors digitalisiert an einen Rechner übertragen.

Nachteilig bei den beiden letzten Verfahren ist, dass Ungänzen mit nur kurzer Längserstreckung, wie z. B. ein Loch oder Ungänzen in ungünstiger Lage, unter Umständen wegen niedriger Signalhöhe nicht detektiert werden können.

Aufgabe der Erfindung ist es, ein Verfahren der gattungsgemäßen Art anzugeben, mit dem auch kurze Fehlstellen im Werkstück sicher detektiert werden können.

Diese Aufgabe wird mit den Merkmalen des Anspruches 1 gelöst. Vorteilhafte Weiterbildungen sind jeweils Gegenstand von Unteransprüchen.

Nach der Lehre der Erfindung werden die ursprünglichen digitalisierten Signale eines Prüfschusses einer Längenposition X mit denen eines Prüfschusses einer Längenposition X + ΔX verglichen und die Amplitudendifferenz bewertet. Dabei ist ΔX ein Vielfaches des Schussabstandes.

Mit dieser Differenztechnik ist es möglich, auch kurze Fehlstellen sicher zu detektieren. Der große Vorteil der vorgeschlagenen Verfahrensweise gegenüber der bekannten Differenztechnik bei der Wirbelstromprüfung (siehe Prospekt der Firma Förster "Wirbelstromprüfung mit Defektomat", Seite 2) ist, dass keine aufwendige Konstruktion mit zwei in einem Längenabstand versetzt angeordneten Wandlern, einschließlich dazugehöriger Elektronik, erforderlich ist. Von weiterem Vorteil ist, dass der Abstand Δ X frei wählbar und nicht durch den einmal gewählten Abstand zwischen den beiden Wandlem fixiert ist.

Je nach vorhandener Rechnerkapazität kann es zweckmäßig sein, die einer Bewertung zu unterwerfenden Signale von der Anzahl her zu begrenzen. Beispielsweise können pro Schuss 60 Signale einer Bewertung zugeführt werden. Es können aber auch 2000 Signale sein.

Grundsätzlich ist die vorgeschlagene Differenztechnik für jede Art von erzeugten Empfangssignalen anwendbar. Der Vorteil wird aber dann besonders sichtbar, wenn die Struktur der Empfangssignale kompliziert ist. Beispielsweise bei Reflektionsanzeigen durch im Prüfling angeregte Plattenwellen. Diese Art der Prüfung kann man noch erweitem, wenn alternativ im Prüftakt an zwei in Umfangsrichtung liegenden Orten in beide Umfangsrichtungen laufende Wellenimpulse erzeugt werden. In diesem Fall würde man die Differenztechnik sowohl für die reflektierten Impulse als auch für die gedämpften Impulse anwenden.

Ein weiterer Anwendungsfall könnte die bekannte US-Prüfung von Längsnähten sein. Bei dieser Prüfung ist es üblich, die Prüfmechanik entlang der Schweißnaht zu führen und im Takt einen Prüfschuss zu setzen. Auch bei diesem Prüfverfahren könnte man das empfangene Signal einer Wegkoordinate X zu einem empfangenen Signal einer Wegkoordinate X+ΔX zuordnen und dann in geeigneter Weise differenzieren.

Weitere Merkmale, Vorteile und Einzelheiten der Erfindung ergeben sich aus der nachfolgenden Beschreibung von einem in einer Zeichnung dargestellten Ausführungsbeispiel.

### Es zeigen:

- **Figur 1**: als Prinzipskizze ein erstes Anwendungsbeispiel für die erfindungsgemäße Auswertetechnik,
- **Figur 2**: der prinzipielle Aufbau des in Figur 1 dargestellten Wandlers,

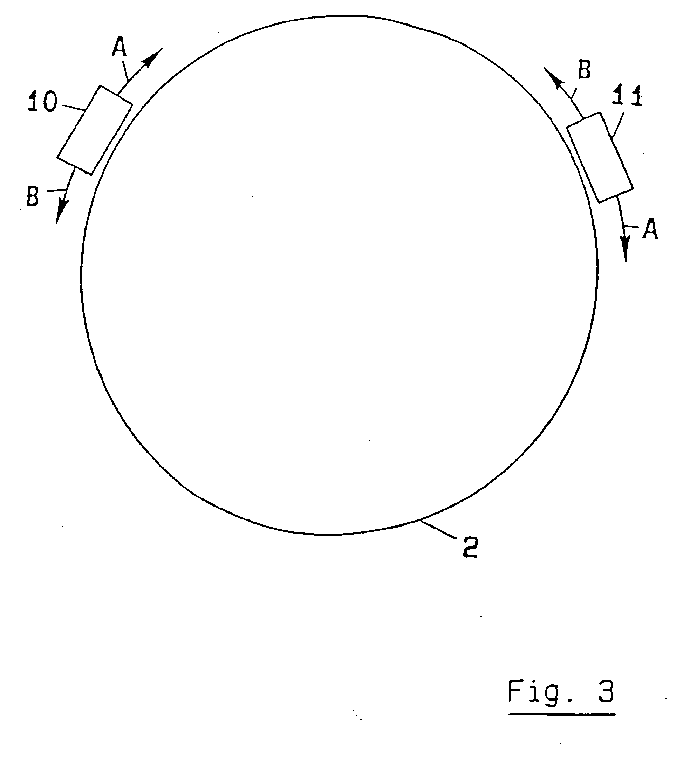

- **Figur 3**: als Prinzipskizze ein zweites Anwendungsbeispiel für die erfindungsgemäße Auswertetechnik,
- **Figur 4**: Beispiel für Signalfolge bei Reflektion und Dämpfung,
- **Figur 5**: skizzenhaft die Auswertetechnik.

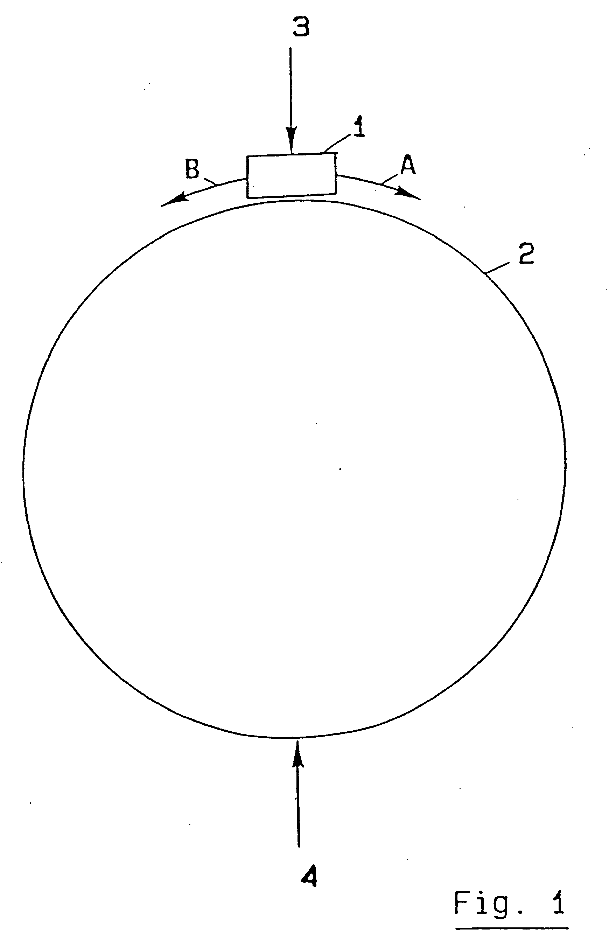

In **Figur 1** ist in Form einer Prinzipskizze ein erstes Anwendungsbeispiel für die erfindungsgemäße Auswertetechnik dargestellt.

Ein in einem bestimmten Abstand zu einem Prüfling 2 angeordneter Wandler 1 strahlt gleichzeitig in beide Umfangsrichtungen des Prüflings 2 einen Wellenimpuls A, B ab. In dieser **Figur 1** ist der im Uhrzeigersinn abgestrahlte Wellenimpuls mit Index A bezeichnet und der im Gegenuhrzeigersinn mit Index B bezeichnet. Beide Wellenimpulse A, B laufen in Umfangsrichtung mehrfach um und treffen sich an zwei definierten Punkten des Umfanges wieder: einmal am Wandler 1 selbst, hier mit Position 3 bezeichnet und auf der genau gegenüberliegenden um 180° versetzt liegenden Seite, hier mit Position 4 bezeichnet. Bei diesem Anwendungsbeispiel ist der Empfangswandler genau dort positioniert, wo die beiden ungestört laufenden Wellenimpulse A, B destruktiv interferieren.

Zur Durchführung des Prüfverfahrens sind zwei Anordnungen möglich, eine in der Weise, dass der Wandler 1 nur Sendewandler ist und in Position 4, der hier nicht dargestellte Empfangswandler, angeordnet wird. Dies wird man nur in sehr seltenen Fällen anwenden, da die genaue Einjustierung des Empfangswandlers schwierig ist.

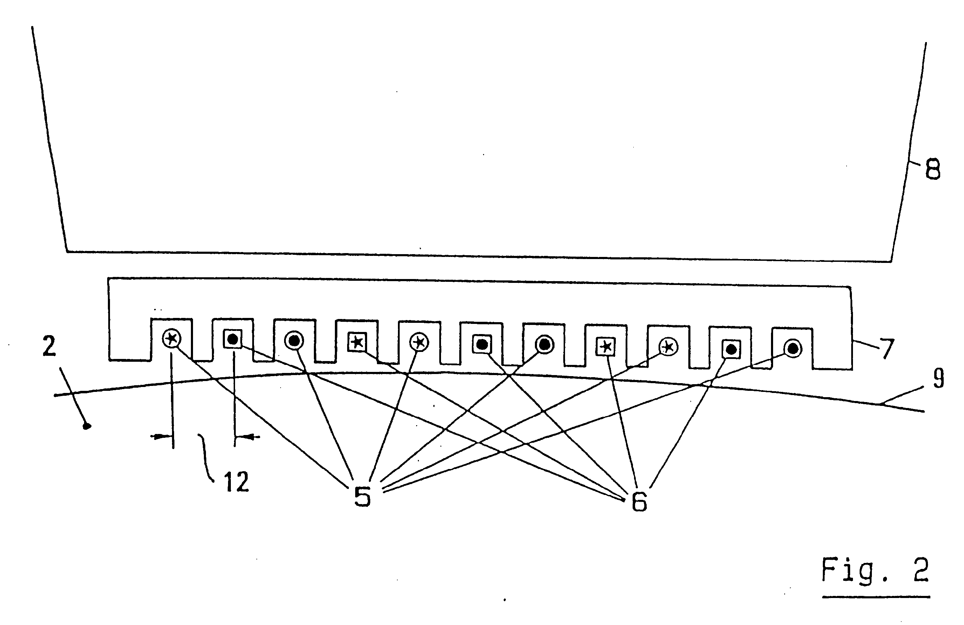

Die andere Möglichkeit besteht darin, dass in dem Wandler 1 Sende- und Empfangsspulen 5, 6 **(****Figur 2****)** ineinander verschachtelt und so gewickelt sind, dass sie um ein Viertel der Wellenlänge der geführten Wellen gegeneinander verschoben sind.

In **Figur 2** sind die Einzelheiten des in **Figur 1** gezeigten Wandlers dargestellt. Zwischen der Oberfläche 9 des Prüflings 2 und dem Magneten 8 bzw. dem Magnetsystem ist der Spulenträger 7 angeordnet. Auf diesem Spulenträger 7 sind die Sende- 5 und Empfangswicklungen 6 ineinander verschachtelt und so gewickelt, dass der Abstand 12 zwischen zwei benachbart liegenden Wicklungen ein Viertel der Wellenlänge beträgt.

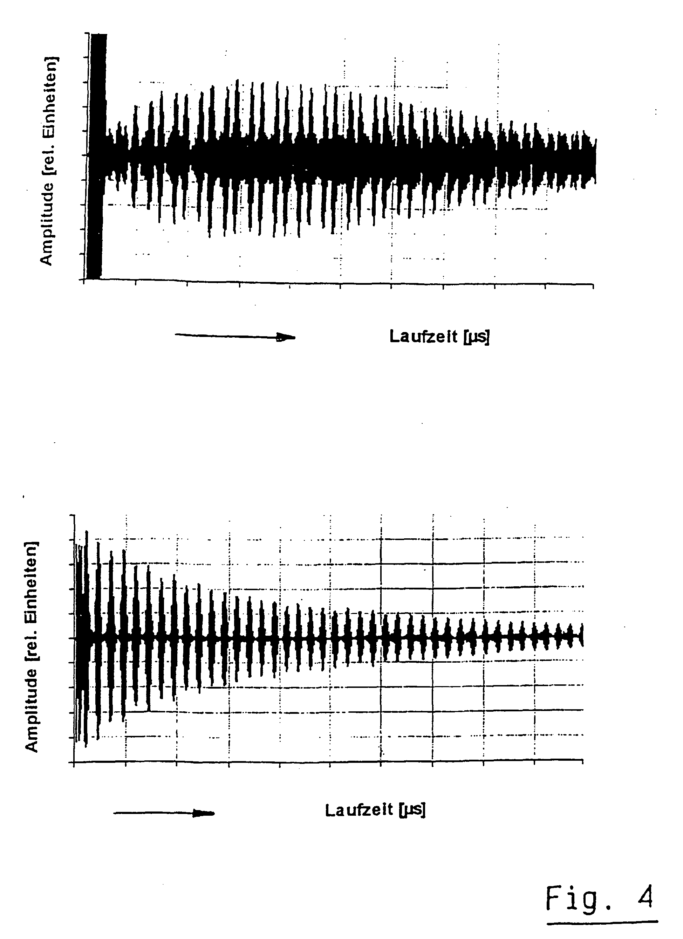

In **Figur 4** ist ebenfalls in Form einer Prinzipskizze ein zweites Ausführungsbeispiel für die erfindungsgemäße Auswertetechnik dargestellt. Bei diesem Anwendungsbeispiel kommen das Impuls-Reflektions-Verfahren und das Durchschallungs-Verfahren gleichzeitig zur Anwendung.

Dazu werden auf dem Umfang des Prüflings 2 zwei voneinander getrennte elektrodynamische Wandler 10, 11 angeordnet. Vorzugsweise beträgt der Umfangsversatz der beiden Wandler 10, 11 neunzig Grad. Beide Wandler 10, 11 weisen die um ein Viertel der Wellenlänge versetzt angeordneten Sende- 5 und Empfangswicklungen 6 auf (siehe **Figur 2**).

Die Sendespulen der beiden Wandler 10, 11 werden alternierend betrieben. Im ersten Takt sendet die Sendespule des links angeordneten Wandlers 10 und die Empfangsspule des rechts angeordneten Wandlers 11 misst die Amplituden der umlaufenden Wellen und führt die Folge von Empfangssignalen einer hier nicht dargestellten Auswerteeinheit zu. Gleichzeitig misst die Empfangsspule des links angeordneten Wandlers 10 Signale, d. h. Reflektionssignale bzw. Signale, die durch die ungleichmäßige Schwächung der in beide Richtungen umlaufenden Wellen verursacht werden und führt diese ebenfalls der Auswerteeinheit zu.

Die in der Empfangsspule des rechts angeordneten Wandlers 11 gemessenen Signale, z. B. die Summe der Amplituden der ersten beiden Peaks, können zusätzlich zur groben Ankoppelkontrolle von der Empfangsspule des links angeordneten Wandlers 10 genutzt werden, da diese in der Sendespule des Wandlers 10 integriert ist.

Für den zweiten Takt erfolgt ein Vertauschen der Anregungen bzw. des Empfanges der beiden Wandler 10, 11.

**Figur 4** zeigt als Beispiel für komplizierte Signalabfolgen im oberen Teilbild eine Abfolge von Reflektionsanzeigen, herrührend von einem Fehler im Prüfling. Das untere Teilbild zeigt eine Abfolge von Signalen infolge der Dämpfung.

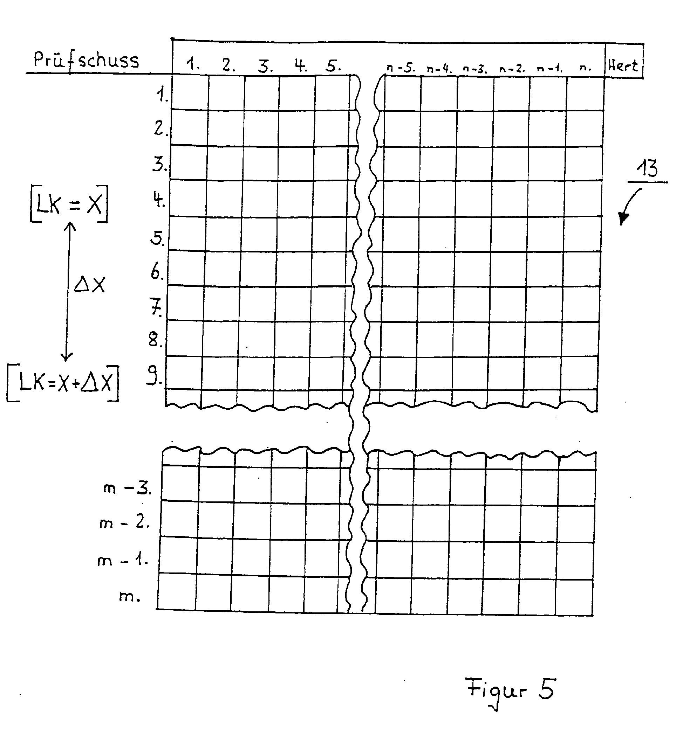

**Figur 5** zeigt schematisch die vorgeschlagene Auswertetechnik. In der Auswerteeinheit ist ein Datenspeicher 13, hier in Form einer Matrix, angeordnet. In diesen Datenspeicher 13 werden die pro Prüfschuss digitalisierten Empfangssignale eingelesen. Beispielsweise werden pro Prüfschuss 50 Werte eingelesen, so dass n = 50 ist.

In einer Zeile darunter werden in gleicher Weise die digitalisierten Empfangssignale des zweiten Prüfschusses eingelesen und so weiter.

Die Differenztechnik besteht nun darin, dass die eingelesenen Werte des vierten Prüfschusses, wobei dieser vierte Prüfschuss einer Längskoordinate X entspricht, mit den Werten des neunten Prüfschusses verglichen und bewertet werden.

Der neunte Prüfschuss entspricht infolge des Weiterwandems des Prüflings um den Betrag ΔX der Längskoordinate X+ ΔX.

Der Vorteil des vorgeschlagenen Verfahrens besteht nun darin, dass das ΔX frei wählbar und damit unabhängig von bestimmten Sondenanordnungen ist und den spezifischen Fehlerbesonderheiten des Prüflings angepasst werden kann.

### Bezugszeichenliste

| **Nr.** | **Bezeichnung** |
|---|---|
| 1 | Wandler |
| 2 | Prüfling |
| 3 | Position (Treffpunkt der Wellenimpulse) |
| 4 | Position (Treffpunkt der Wellenimpulse) |
| 5 | Sendespule |
| 6 | Empfangsspule |
| 7 | Spulenträger |
| 8 | Magnetsystem |
| 9 | Oberfläche des Prüflings |
| 10 | Wandler |
| 11 | Wandler |
| 12 | Wicklungsabstand |
| 13 | Datenspeicher |

## Patentansprüche

1. Verfahren zur Erfassung von Ungänzen an langgestreckten Werkstücken, insbesondere Rohre und Stangen mittels Ultraschall, bei dem der Prüfling und mindestens ein auf den Prüfling gerichteter Prüfkopf relativ zueinander in axialer Richtung bewegt und die Empfangssignale einer Auswerteeinheit zugeführt werden, wobei
die ursprünglichen digitalisierten Signale eines sich tangential in beiden Umfangsrichtungen ausbreitenden Prüfschusses einer Längenposition X mit denen eines Prüfschusses einer Längenposition X+ Δ X verglichen und
die Differenz der Amplitude bewertet wird, wobei Δ X ein Vielfaches des aus der axialen Relativbewegung resultierenden Schussabstandes ist.

2. Verfahren nach Anspruch 1
**dadurch gekennzeichnet,**
**dass** Δ X frei wählbar ist.

3. Verfahren nach Anspruch 1 und 2
**dadurch gekennzeichnet,**
**dass** eine begrenzte Zahl von Signalen einer Bewertung unterworfen wird.

4. Verfahren nach Anspruch 3
**dadurch gekennzeichnet,**
**dass** die Anzahl der bewerteten Signale im Bereich zwischen 20 und 100 liegt.

5. Verfahren nach einem der Ansprüche 1 - 4
**dadurch gekennzeichnet,**
**dass** der Prüfkopf als elektrodynamischer Wandler ausgebildet ist und der Prüfling in axialer Richtung ohne Drehung am Wandler vorbei geführt wird und im Prüfling tangential umlaufende Wellenimpulse, die sich in beide Umfangsrichtungen ausbreiten, im Takt erzeugt und an einen um ein Viertel der Spurwellenlänge der geführten Wellen zum Sendeort verschobenen Empfangsort empfangen werden, wobei dieser Ort des Empfängers und der Anregung der gleichzeitig in beide Umlaufrichtungen des Prüflings laufenden Wellenimpulse derart gewählt wird, dass die beiden ungestört laufenden Wellenimpulse am Ort des Empfängers destruktiv interferieren, wobei für jeden Takt das Empfangssignal und ein Burstsignal derselben Frequenz, geeigneter Zeitdauer und Startverzögerung einem Peak-Detektor zugeführt und die Amplituden digitalisiert in der Auswerteeinheit bewertet werden.

6. Verfahren nach einem der Ansprüche 1 - 4
**dadurch gekennzeichnet,**
**dass** alternierend im Prüftakt an zwei in Umfangsrichtung getrennt liegenden Orten in beide Umfangsrichtungen laufende Wellenimpulse angeregt werden und der Ort des Empfangens für die reflektierten Impulse verschieden ist von dem der gedämpften Impulse und die jeweilige Folge von Empfangssignalen getrennt bewertet werden.

## Claims

1. A method of detecting flaws on elongate workpieces, in particular pipes and rods by means of ultrasound, in which the test piece and at least one test head directed onto the test piece are moved relative to each other in the axial direction and the received signals are passed on to an evaluation unit, wherein the original digitalized signals of a test shot of a longitudinal position **X** spreading tangentially in the two peripheral directions are compared with those of a test shot of a longitudinal position **X** + Δ **X,** and the difference in amplitude is evaluated, wherein Δ **X** is a multiple of the shot distance resulting from the axial relative movement.

2. A method according to Claim 1, **characterized in that** Δ X is capable of being freely selected.

3. A method according to Claims 1 and 2, **characterized in that** a limited number of signals are subjected to an evaluation.

4. A method according to Claim 3, **characterized in that** the number of the signals evaluated is in the range of between 20 and 100.

5. A method according to any one of Claims 1 to 4, **characterized in that** the test head is constructed in the form of an electrodynamic converter and the test piece is moved past the converter in the axial direction without rotation, and wave pulses, which circulate tangentially in the test piece and which spread in the two peripheral directions, are produced in a clock-time sequence and are received at a reception location displaced by a quarter of the trace-wave length of the guided waves to the transmission location, wherein the said location of the receiver and of the excitation of the wave pulses moving simultaneously in the two circulation directions of the test piece is selected in such a way that the two wave pulses moving without disturbance interfere in a destructive manner at the location of the receiver, wherein for each clock-time sequence the received signal and a burst signal of the same frequency, suitable duration and start delay are passed on to a peak detector and the amplitudes are evaluated, digitalized, in the evaluation unit.

6. A method according to any one of Claims 1 to 4, **characterized in that** wave pulses running in the two peripheral directions are excited in an alternating manner in the testing clock-time sequence at two locations arranged separately in the peripheral direction, and the location of the reception for the reflected pulses is different from that of the damped pulses, and the respective sequence of received signals is evaluated in a separate manner.

## Revendications

1. Procédé destiné à détecter les défauts sur les pièces d'usinage allongées, notamment les tubes et les barres, au moyen d'ultrasons, dans lequel la pièce à contrôler et au moins une tête de contrôle dirigée sur la pièce à contrôler sont déplacées dans le sens axial l'une par rapport à l'autre et les signaux de réception sont transmis à une unité d'analyse, les signaux numérisés d'origine d'un tronçon d'essai d'une position longitudinale X se déployant de manière tangentielle dans les deux directions périphériques étant comparés à ceux d'un tronçon d'essai d'une position longitudinale X + ΔX et la différence de l'amplitude étant évaluée, ΔX étant un multiple de l'écart de tronçon résultant du mouvement relatif axial.

2. Procédé selon la revendication 1,
**caractérisé en ce que** ΔX peut être choisi librement.

3. Procédé selon les revendications 1 et 2,
**caractérisé en ce qu'**un nombre limité de signaux est soumis à une évaluation.

4. Procédé selon la revendication 3,
**caractérisé en ce que** le nombre des signaux évalués est compris entre 20 et 100.

5. Procédé selon l'une des revendications 1 à 4,
**caractérisé en ce que** la tête de contrôle est réalisée sous la forme d'un transducteur électrodynamique, **en ce que** la pièce à contrôler est guidée dans le sens axial sans rotation devant le transducteur et **en ce que** des impulsions d'ondes circulant de manière tangentielle dans la pièce à contrôler, lesquelles se propagent dans les deux directions périphériques, sont produites périodiquement et reçues à un point de réception décalé par rapport au point d'émission d'un quart de la longueur d'onde longitudinale des ondes guidées, ce lieu du récepteur et de la production des impulsions d'ondes circulant simultanément dans les deux directions périphériques de la pièce à contrôler étant choisi de telle façon que les deux impulsions d'ondes circulant sans perturbation interfèrent de manière destructive sur le lieu du récepteur, le signal de réception et un signal en rafale de même fréquence, de durée et de retard au démarrage adéquats étant transmis pour chaque cycle à un détecteur de pic et les amplitudes, numérisées dans l'unité d'analyse, étant évaluées.

6. Procédé selon l'une des revendications 1 à 4,
**caractérisé en ce qu'**alternativement, dans le cycle de contrôle, il est activé, à deux endroits situés de manière séparée dans le sens périphérique, des impulsions d'ondes circulant dans les deux directions périphériques et **en ce que** le lieu de la réception pour les impulsions réfléchies est différent de celui des impulsions amorties et les différentes séquences de signaux de réception sont évaluées séparément.
